Europäisches Patentamt

European Patent Office

Office européen des brevets

(11) Publication number: **0 351 434**
**A1**

(12) **EUROPEAN PATENT APPLICATION**
published in accordance with Art.
158(3) EPC

(21) Application number: 88908747.4

(22) Date of filing: 05.10.88

(86) International application number:
PCT/JP88/01014

(87) International publication number:
WO 89/03069 (06.04.89 89/08)

(51) Int. Cl.⁴: **G05B 19/04**

(30) Priority: 05.10.87 JP 251364/87

(43) Date of publication of application:
24.01.90 Bulletin 90/04

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **KAWAMURA, Hideaki 1375-5,**
**Narahara-cho**
**Hachioji-shi**
**Tokyo 193(JP)**
Inventor: **SASAKI, Takao Esuteto-Hachioji**
**2-502**
**469-4, Kobiki-cho**
**Hachioji-shi Tokyo 193(JP)**
Inventor: **HOSOKAWA, Masahiko Fanuc Dai 3**
**Villa Karamatsu**
**3527-1, Shibokusa Oshino-mura**
**Minamitsuru-gun Yamanashi 401-05(JP)**

(74) Representative: **Billington, Lawrence Emlyn et**
**al**
**HASELTINE LAKE & CO Hazlitt House 28**
**Southampton Buildings Chancery Lane**
**London WC2A 1AT(GB)**

(54) **METHOD AND APPARATUS FOR PROGRAM LOADING.**

(57) A method and an apparatus for loading a control program in a CNC to execute it. In this method, maintenance such as program debugging can be carried out without the need of exchanging a fixed storage device (3) that stores the control program. More particularly, a correction file is transferred from an external unit to a nonvolatile memory (5), and a required correction file is specified at the time of loading so that the control program corrected based thereupon is loaded onto the control memory (2).

Therefore, maintenance is facilitated from the standpoint of CNC software.

# Fig. 1

CRT/MDI — 6

INPUT DEVICE — 7

MODEM — 8

5 — NON-VOLATILE MEMORY

1 — CPU

RAM — 2

LOADER — 4

ROM — 3

## DESCRIPTION

PROGRAM LOADING APPARATUS AND LOADING METHOD

Technical Field

This invention relates to a program loading apparatus and loading method, in which a control program or the like is loaded in a numerical control apparatus incorporating a computer.

Background Art

Highly functional NC machine tools in which a machine tool is controlled by a numerical control apparatus (CNC) incorporating a computer have recently come into widespread use in order to reduce labor at factories.

With such a computer-based CNC apparatus, a control (execute) program for establishing system operating performance is stored in a ROM, which is a permanent memory, and is transferred to a volatile control memory such as a RAM at the same time that power is introduced. In a conventional system in which a control program written in a ROM is executed, it is possible to store a large-capacity control program reliably at low cost. However, when a bug is discovered in the control program, the ROM must be exchanged for one storing the corrected program. Since this replacement of the ROM is performed by maintenance service personnel on the maker side, urgent revision of the program on the user side is difficult. ROM replacement also requires labor and expense for maintenance services on the maker side.

A method which has been considered for the purpose of readily revising a control program is to use a rewritable non-volatile memory, such as a magnetic bubble memory, instead of the aforementioned ROM. If the control program is written in a rewritable memory device of this kind, the program can be revised by the user himself and the data stored can be preserved without supplying power.

However, in order to store a control program in a magnetic bubble memory, the latter must have a large capacity, which involves the problem of high cost. In addition, in order to newly register a control program in a bubble memory, it is necessary to prepare a paper tape or floppy disk on which the program has been written. Furthermore, there is the danger that the contents of a program stored in a magnetic bubble memory will be destroyed in the event of a power failure when reading or writing the program or because of some other mishap. Restoration measures will be necessary in such a case. Moreover, labor and expense must be expended in order to annex and store paper tapes or floppy disks.

Disclosure of the Invention

The present invention has been devised in order to solve the foregoing problems and its object is to provide a program loading apparatus and loading method in which, when a control (execute) program of an NC apparatus stored in a ROM is required to be revised, the revision can be made with ease on the user side without increasing the labor and cost of program revision on the maker side.

In accordance with the present invention, there is provided a program loading apparatus for transferring a control program stored in a ROM to a RAM when power is introduced to a CNC, with the CNC executing the control program read out of the RAM, comprising data originating means for forming revision data, non-volatile memory means for storing the revision data, and revising means for revising the control program. Also provided is a novel loading method adapted to transfer a revised control program to the RAM.

Accordingly, with the program loading apparatus and loading method of the present invention, a partial program necessary for revising the control program is stored in the memory means, serving as a revision file, via a manual input unit or communication interface when revision of the control program is made. When the control program is transferred from the ROM to the RAM at introduction of power to the NC apparatus, the partial program necessary for revision of the control program is read out of the memory means and revision of the control program is performed with the partial program serving as the revision file. The invention therefore is advantageous in that program revision labor and cost can be reduced in comparison with the prior art.

Brief Description of the Drawing

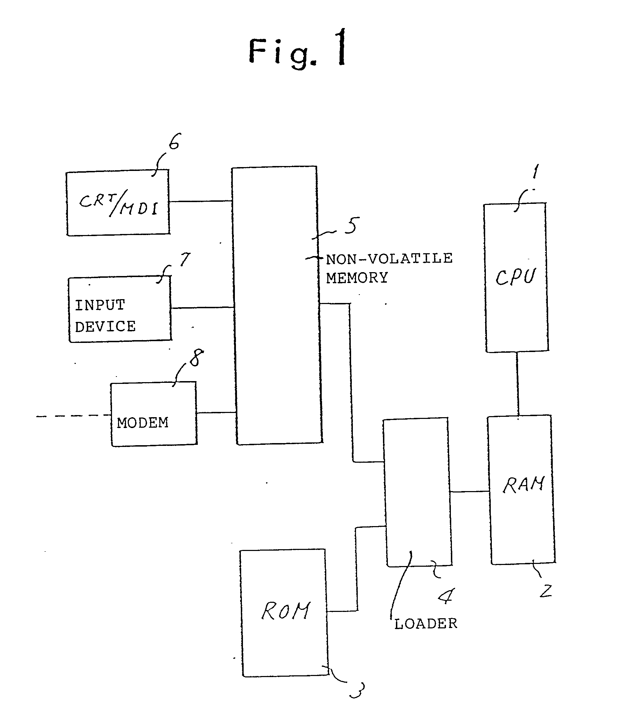

Fig. 1 is a block diagram illustrating an embodiment of the present invention.

Best Mode for Carrying Out the Invention

An embodiment of the present invention will now be described in detail with reference to the drawing.

Fig. 1 is a block diagram illustrating an embodiment of the present invention. Numeral 1 denotes a central control unit (CPU) for sending control commands to an NC apparatus. Connected to the control unit is a RAM 2 serving as a memory for freely reading and writing a control (execute) program of the NC system. Numeral 3 denotes a read-only memory ROM in which the control program is stored. When power is introduced to the NC apparatus, the stored control program is transferred to the RAM 2 via a loader 4 and is read out of the RAM 2 by the CPU 1 to be executed thereby.

Numeral 5 denotes a non-volatile memory serving as revision file memory means and comprises a magnetic bubble memory, a battery-backed RAM or a hard disk. A CRT/MDI 6, an input device 7 and a modem 8 are connected to the input side of the non-volatile memory. If a bug is discovered in the control program, program revision data from a keyboard serving as manual input means of the CRT/MDI 6, revision data stored on a paper

tape and entered via the input device 7, or revision data from an interface such as an RS-232C or RS-422 and entered via the modem 8 is stored in the non-volatile memory 5 as a revision file.

The output side of the non-volatile memory 5 is connected to the loader 4. The arrangement is such that when power is introduced to the NC apparatus and the control program stored in ROM 3 is transferred to the RAM 2, the control program is revised in accordance with the stored revision file and loaded in the RAM 2 if the revision file is in the non-volatile memory 5.

If a bug is discovered in the control program stored in ROM 3 in the embodiment thus constructed, first the revision data is stored as a revision file by being inputted to the non-volatile memory 5 via the CRT/MDI 6 or input device 7 or transmitted to the non-volatile memory 5 via the modem 8 and communication interface. When the control program is transferred from the ROM 3 to the RAM 2 via the loader 4 at introduction of power to the NC apparatus, the bug in the control program is corrected in accordance with the revision file of non-volatile memory 5 and the revised control program is then stored in the RAM 2.

It should be noted that the revision file of the non-volatile memory is not only for correcting a bug in the program as mentioned above but can also be used when revising part of a control program on the maker side or when PMC or MMC software is developed and a revision is made by the software developed.

When the control program is revised, the revision data is sent to the non-volatile memory via the manual input device or communication interface to serve as a revision file. When the control program is transferred from the ROM to the RAM at introduction of power, revision of the control program is carried out in accordance with the revision file of the non-volatile memory means and the revised control program is transferred to the RAM to be executed. As a result, labor and costs are reduced in comparison with the prior art.

In a case where software developed not only by the maker of the NC apparatus but also on the side of the machine maker, namely the user, is executed, this can be performed with facility without requiring labor, and software maintenance can be carried out efficiently. Furthermore, software can be revised using a telephone line or the like by employing the communication modem.

Though an embodiment of the present invention has been described, the invention can be modified in various ways without departing from the scope of the claims.

Industrial Applicability

The program loading apparatus and loading method of the present invention are for creating control programs in the CNC field and are advantageous for both the user and maker in terms of management.

CLAIMS:

1. A program loading apparatus for transferring a control program stored in a ROM to a RAM when power is introduced to a CNC, with the CNC executing the control program read out of said RAM, comprising:

data originating means provided in said CNC for forming revision data necessary for said control program;

non-volatile memory means for storing said revision data as a revision file of the control program; and

revising means for revising the control program in accordance with said revision file when the control program is transferred from said ROM to said RAM.

2. A program loading apparatus according to claim 1, characterized in that said data originating means is connected to the CNC via a communication interface.

3. A program loading apparatus according to claim 1, characterized in that said memory means is constituted by a bubble memory.

4. A program loading apparatus according to claim 1, characterized in that said memory means is constituted by a RAM backed up by a battery.

5. A program loading apparatus according to claim 1, characterized in that said memory means is constituted by a hard disk device capable of being randomly accessed.

6. A program loading method for transferring a control program stored in a ROM to a RAM when power is introduced to a CNC, with said CNC executing the control program in said RAM, comprising the steps of transferring a revision file of the control program from outside said CNC, checking for the presence of the revision file when power is introduced, and revising the control program, which is read out of said ROM, in accordance with the corresponding revision file.k

# Fig. 1

# INTERNATIONAL SEARCH REPORT

International Application No  PCT/JP88/01014

## I. CLASSIFICATION OF SUBJECT MATTER (if several classification symbols apply, indicate all) 6

According to International Patent Classification (IPC) or to both National Classification and IPC

Int. Cl$^4$    G05B19/04

## II. FIELDS SEARCHED

### Minimum Documentation Searched 7

| Classification System | Classification Symbols |
|---|---|
| IPC | G05B19/04 |

### Documentation Searched other than Minimum Documentation to the Extent that such Documents are Included in the Fields Searched 8

| | |
|---|---|
| Jitsuyo Shinan Koho | 1932 – 1988 |
| Kokai Jitsuyo Shinan Koho | 1971 – 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 60-41133 (NEC Corporation) 4 March 1985 (04. 03. 85) (Family: none) | 1-6 |
| Y | JP, A, 58-200346 (NEC Corporation) 21 November 1983 (21. 11. 83) (Family: none) | 1-6 |
| Y | JP, U, 59-160352 (Hitachi, Ltd.) 27 October 1984 (27. 10. 84) (Family: none) | 1-6 |
| Y | JP, A, 61-143807 (Mitsubishi Electric Corporation) 1 July 1986 (01. 07. 86) (Family: none) | 1-6 |
| Y | JP, A, 61-147304 (Hitachi Seiki Co., Ltd.) 5 July 1986 (05. 07. 86) (Family: none) | 1-6 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 14, 1988 (14. 12. 88) | December 26, 1988 (26. 12. 88) |

| International Searching Authority | Signature of Authorized Officer |
|---|---|
| Japanese Patent Office | |

Form PCT ISA/210 (second sheet) (January 1985)